# EUROPÄISCHE PATENTSCHRIFT

(11) **EP 2 242 797 B1**
(45) Veröffentlichungstag und Bekanntmachung des Hinweises auf die Patenterteilung: **04.01.2012**
(21) Anmeldenummer: 09710940.9
(22) Anmeldetag: 11.02.2009
(51) Int. Cl.: C08L 1/00, C08L 33/00, C08K 5/16

(54) **FORMALDEHYDFREIE BINDEMITTEL ZUR HERSTELLUNG VON HOLZWERKSTOFFEN**
FORMALDEHYDE-FREE BINDERS FOR PRODUCING WOOD PRODUCTS
LIANTS EXEMPTS DE FORMALDÉHYDE UTILISÉS POUR PRODUIRE DES MATÉRIAUX LIGNEUX

(30) Priorität: 11.02.2008 EP 08151282
(43) Veröffentlichungstag der Anmeldung: 27.10.2010
(73) Patentinhaber: BASF SE, 67056 Ludwigshafen (DE)
(72) Erfinder: KÄSMAYR, Daniel, 80807 München (DE); NOZARI, Samira, 68161 Mannheim (DE)
(86) Internationale Anmeldenummer: PCT/EP2009/051554
(87) Internationale Veröffentlichungsnummer: WO 2009/101100

(56) Entgegenhaltungen:
- WO-A-03/035778
- WO-A-2007/122089
- WO-A-2008/095900
- US-A- 3 998 768

## Beschreibung

Die vorliegende Erfindung betrifft einen lignocellulosehaltigen Stoff, erhältlich durch Behandeln von Lignocellulose A mit einem Bindemittel B wie in den Ansprüchen definiert.

Ferner betrifft die vorliegende Erfindung Formkörper, enthaltend den lignocellulosehaltigen Stoff, Verfahren zur Herstellung des lignocellulosehaltigen Stoffs, Verfahren zur Herstellung von Formkörpern unter Verwendung des lignocellulosehaltigen Stoffs, die Verwendung des lignocellulosehaltigen Stoffs zur Herstellung von Formkörpern sowie die Verwendung der Formkörper zur Herstellung von Möbeln, von Verpackungsmaterialien, im Hausbau oder im Innenausbau oder in Kraftfahrzeugen.

Werkstoffe auf Basis von Lignocellulose sind bekannt. Wichtige Beispiele für lignocellulosehaltige Stoffe sind Holzteile, wie Holzlagen, Holzstreifen, Holzspäne, oder Holzfasern, wobei die Holzfasern gegebenenfalls auch von holzfaserhaltigen Pflanzen, wie Flachs, Hanf, Sonnenblumen, Topinambur oder Raps stammen können. Ausgangsmaterialien für solche Holzteile oder Holzpartikel sind üblicherweise Durchforstungshölzer, Industrieresthölzer und Gebrauchthölzer sowie holzfaserhaltige Pflanzen.

Die Aufbereitung zu den gewünschten lignocellulosehaltigen Stoffen, wie Holzpartikel, erfolgt nach bekannten Verfahren, siehe zum Beispiel M. Dunky, P. Niemt, Holzwerkstoffe und Leime, S. 91-156, Springer Verlag Heidelberg, 2002.

Lignocellulosehaltige Formkörper, im Falle von Holz als Lignocellulose hier auch Holzwerkstoffe genannt, sind eine kostengünstige und Ressourcen schonende Alternative zu Massivholz und haben große Bedeutung, insbesondere im Möbelbau und als Baumaterialien, erlangt. Als Ausgangsstoffe für Holzwerkstoffe dienen in der Regel Holzlagen unterschiedlicher Stärke, Holzstreifen, Holzspäne oder Holzfasern aus verschiedenen Hölzern. Solche Holzteile oder Holzpartikel werden üblicherweise bei erhöhter Temperatur mit natürlichen und/oder synthetischen Bindemitteln und gegebenenfalls unter Zugabe weiterer Additive zu platten- oder strangförmigen Holzwerkstoffen verpresst. Beispiele für solche lignocellulosehaltigen Formkörper oder Holzwerkstoffe sind mitteldichte Faserplatten (MDF), Holzspanwerkstoffe - wie Spanplatten und Grobspanplatten (OSB, oriented strand board) -, Sperrholz -wie Furniersperrholz - und Leimholz.

Als Bindemittel werden in der Regel formaldehydhaltige Bindemittel eingesetzt, beispielsweise Harnstoff-Formaldehydharze oder melaminhaltige Harnstoff-Formaldehydharze. Die Harze werden durch Polykondensation von Formaldehyd mit Harnstoff und/oder Melamin hergestellt. Die Verwendung derartiger Formaldehydharze kann dazu führen, dass im fertigen Holzwerkstoff freier Formaldehyd vorliegt. Durch Hydrolyse der Polykondensate kann zusätzlicher Formaldehyd freigesetzt werden. Der im Holzwerkstoff enthaltene freie Formaldehyd und der während der Lebensdauer des Holzwerkstoffs durch Hydrolyse freigesetzte Formaldehyd können an die Umgebung abgegeben werden.

Formaldehyd kann oberhalb bestimmter Grenzwerte beim Menschen Allergien, Haut-, Atemwegs- oder Augenreizungen verursachen. Die Reduzierung der Formaldehydemission in Bauteilen, vor allem im Innenbereich, ist daher eine wichtige Herausforderung.

Im Stand der Technik werden bestimmte formaldehydfreie wässrige Bindemittel - unter anderem für Holzfasern - auf Basis von Polymeren aus ethylenisch ungesättigten Carbonsäuren beschrieben:
WO 97/31059 A1 (BASF Aktiengesellschaft) beschreibt die Verwendung eines formaldehydfreien, wässrigen Bindemittels aus A) Polycarbonsäure und B) einem Alkanolamin mit mindestens zwei Hydroxylgruppen als Bindemittel für Fasern, Schnitzel oder Spänen zur Herstellung von Formkörpern. In den Beispielen wird als Komponente A) eine wässrige Lösung eines Copolymerisats aus 80 Acrylsäure / 20 Maleinsäure und als Komponente B) Triethanolamin beschrieben sowie die Verwendung des entsprechenden Bindemittels zur Herstellung von Holz-Spanplatten beschrieben.

DE 102 53 498 A1 (BASF Aktiengesellschaft) beschreibt eine wässrige Polymerdispersion die erhältlich ist durch wässrige Emulsionspolymerisation von, beispielsweise, Acrylat- und Styrolmonomeren in Gegenwart eines Polymerisats A2, zum Beispiel auf Basis eines Copolymers aus Acrylsäure/Maleinsäureanhydrid//ungesättigte Aminkomponente. Die so erhältliche wässrige Polymerdispersion wird zur konstruktiven Holzverleimung verwendet.

WO 2006/82223 A1 (BASF Aktiengesellschaft) beschreibt eine bestimmte, durch radikalische Emulsionspolymerisation erhältliche, wässrige Polymerdispersion, zum Beispiel gebildet durch Polymerisation der Monomeren Methacrylsäure, N-Methylolacrylamid, Methylmethacrylat, Styrol und n-Butylacrylat. Die Verwendung derartiger Polymerdispersionen als Bindemittel für cellulosische Fasern für die Herstellung von Filtermaterialien oder als Rohpapier für Dekorfolien wird beansprucht.

WO 2007/122089 A1 (BASF Aktiengesellschaft) beschreibt eine wässrige Polymerzusammensetzung die erhältlich ist durch radikalische, wässrige Emulsionspolymerisation von, beispielsweise, Acrylsäure, Acrylat- und Styrolmonomeren in Gegenwart eines Polymerisats A2, zum Beispiel auf Basis eines Acrylsäurehomopolymers. Die so erhältliche wässrige Polymerdispersion wird in den Beispielen als Bindemittel für gepresste Prüfkörper aus Hanf-/Flachs-Fasermatten verwendet.

WO 2003/034778 (BASF Aktiengesellschaft) beschreibt ein wässriges Bindemittelsystem für fasrige oder körnige Materialien auf Basis eines Emulsionspolymerisats EP, eines Säurepolymeren SP sowie eines mono- oder polyfunktionellen Epoxidhärters, ein Verfahren zur Herstellung von Formkörpern auf Basis dieses wässrigen Bindemittelsystems und der fasrigen oder körnigen Materialien sowie die nach dem Verfahren zugänglichen Formkörper, welche sich u.a. durch verringerte Wasseraufnahmen und Auswaschverluste auszeichnen.

US-A 3,998,768 beschreibt eine pulverförmige Beschichtungszusammensetzung, umfassend ein Polymer mit einer hohen Glasübergangstemperatur, ein Polymer mit einer niedrigen Glasübergangstemperatur, eine Polyisocyanatverbindung, einen hydroxyfunktionalisierten Polyester sowie katalytische Mengen einer Organometallverbindung und die Verwendung der pulverförmigen Beschichtungszusammensetzung als Klarlackkomponente bei der Automobilherstellung.

Die im Stand der Technik beschriebenen Bindemittel sind wohl formaldehydfrei Lassen aber beispielsweise in puncto mechanische Belastbarkeiten (zum Beispiel Querzugfestigkeit) oder Verhalten gegenüber Wasser (zum Beispiel Quellung) der mit ihnen hergestellten Formkörper nach Raum für Verbesserungen.

Die Aufgabe der vorliegenden Erfindung war demnach, die im Stand der Technik aufgezeigten Nachteile zu überwinden. Insbesondere sollten formaldehydfreie Bindemittel aufgezeigt werden, die zu guten mechanische Eigenschaften, wie Querzugfestigkeit, und gleichzeitig guter Wasserverträglichkeit (zum Beispiel ausgedrückt durch niedrige Quellwerte) der Holzwerkstoffe führen. Darüber hinaus sollte ein solches Bindemittel kostengünstig herstellbar und leicht verarbeitbar sein.

Die Aufgabe wurde gelöst durch einen
Lignocellulosehaltigen Stoff, erhältlich durch Behandlung von Lignocelluloseteilchen A mit einem Bindemittel B, wobei das Bindemittel B folgende Komponenten enthält:
Eine wässrige Komponente (I) enthaltend
   (i) ein Polymer A, welches aus folgenden Monomeren aufgebaut ist:
      a) 80 bis 100 Gew.-% wenigstens einer ethylenisch ungesättigten Mono- und/oder Dicarbonsäure (Monomer(e) A1) und
      b) 0 bis 20 Gew.-% wenigstens eines weiteren ethylenisch ungesättigten Monomeren, welches sich von den Monomeren A1 unterscheidet (Monomer(e) A2) und gegebenenfalls
   (ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy
und eine Komponente (II) als wässrige Dispersion, enthaltend
ein oder mehrere Polymer(e) M, welches aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wenigstens eines weiteren ethylenisch ungesättigten Monomeren, welches sich von den Monomeren M1 unterscheidet (Monomer(e) M2)
sowie gegebenenfalls übliche Additive als Komponente (III).

Der Begriff Lignocellulose ist dem Fachmann bekannt. Wichtige Beispiele für Lignocelluloseteilchen A sind Holzteile (Holz), wie Holzlagen, Holzstreifen, Holzspäne, oder Holzfasern, wobei die Holzfasern gegebenenfalls auch von holzfaserhaltigen Pflanzen, wie Flachs, Hanf, Sonnenblumen, Topinambur oder Raps stammen können.

Bevorzugt als Lignocelluloseteilchen A sind Holzpartikel, insbesondere Holzfasern oder Holzspäne.

Das Bindemittel B enthält:
Eine wässrige Komponente (I) enthaltend
   (i) ein Polymer A, welches aus folgenden Monomeren aufgebaut ist:
      a) 80 bis 100 Gew.-% wenigstens einer ethylenisch ungesättigten Mono- und/oder Dicarbonsäure (Monomer(e) A1) und
      b) 0 bis 20 Gew.-% wenigstens eines weiteren ethylenisch ungesättigten Monomeren, welches sich von den Monomeren A1 unterscheidet (Monomer(e) A2) und gegebenenfalls
   (ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy
und eine Komponente (II) als wässrige Dispersion, enthaltend
ein oder mehrere Polymer(e) M, welches aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wenigstens eines weiteren ethylenisch ungesättigten Monomeren, welches sich von den Monomeren M1 unterscheidet (Monomer(e) M2)
sowie gegebenenfalls übliche Additive als Komponente (III).

Das Polymer A ist aus folgenden Monomeren aufgebaut:
a) 80 bis 100 Gew.-% wenigstens einer ethylenisch ungesättigten Mono- und/oder Dicarbonsäure (Monomer(e) A1) und
b) 0 bis 20 Gew.-% wenigstens eines weiteren ethylenisch ungesättigten Monomeren, welches sich von den Monomeren A1 unterscheidet (Monomer(e) A2).

Die Herstellung von Polymeren A ist dem Fachmann geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als Monomere A1 kommen insbesondere 3 bis 6 C-Atome aufweisende α,β-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure und die Zweier-Kombinationen aus Acrylsäure und Maleinsäureanhydrid oder Acrylsäure und Maleinsäure insbesondere bevorzugt sind.

Als Monomer(e) A2 kommen in einfacher Weise mit Monomer(en) A1 radikalisch copolymerisierbare ethylenisch ungesättigte Verbindungen in Betracht, beispielsweise Ethylen; vinylaromatische Monomere, wie Styrol, α-Methylstyrol, o-Chlorstyrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl-und -2-ethylhexylester, Fumar- und Maleinsäuredimethylester oder -di-n-butylester; Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen (20 °C, 1 atm (absolut)) lediglich eine mäßige bis geringe Löslichkeit auf.

Weitere Monomere A2, die allerdings unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid; ferner Vinylsulfonsäure, 2-Acrylamido-2-methylpropan-sulfonsäure, Styrolsulfonsäure und deren wasserlösliche Salze sowie N-Vinylpyrrolidon; 2-Vinylpyridin, 4-Vinylpyridin; 2-Vinylimidazol; 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Üblicherweise sind die vorgenannten wasserlöslichen Monomeren A2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren A2, enthalten.

Weitere Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl-und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat.

Häufig werden die vorgenannten vernetzenden Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt. Insbesondere bevorzugt werden jedoch keinerlei derartige vernetzende Monomeren A2 zu Herstellung des Polymers A eingesetzt.

Erfindungsgemäß vorteilhaft beträgt der einpolymerisierte Anteil an Monomeren A2 im Polymer A ≤ 10 Gew.-% oder ≤ 5 Gew.-%.

Insbesondere vorteilhaft enthält das Polymer A keinerlei Monomeren A2 einpolymerisiert.

Bevorzugte Polymere A sind erhältlich durch radikalisch initiierte Lösungspolymerisation lediglich von Monomeren A1, besonders bevorzugt von 65 bis 100 Gew.-%, ganz besonders bevorzugt von 70 bis 90 Gew.-% Acrylsäure mit besonders bevorzugt 0 bis 35 Gew.-%, ganz besonders bevorzugt 10 bis 30 Gew.-% Maleinsäure oder Maleinsäureanhydrid.

Vorteilhaft weist Polymer A ein gewichtsmittleres Molekulargewicht Mw im Bereich von 1000 g/mol bis100000 g/mol auf.

Die Einstellung des gewichtsmittleren Molekulargewichts Mw bei der Herstellung von Polymer A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts Mw ist dem Fachmann geläufig und erfolgt beispielsweise mittels Gelpermeationschromatograpie.

Gut geeignete Handelsprodukte für Polymere A sind zum Beispiel die Sokalan®-Produkte der BASF SE, welche beispielsweise basieren auf Acrylsäure und/oder Maleinsäure.

Gegebenenfalls enthält die Komponente (I) einen niedermolekularen Vernetzer (ii) mit mindestens zwei funktionellen Gruppen welche ausgewählt sind aus der Gruppe Hydroxy, Carbonsäure und deren Derivate, primäres, sekundäres und tertiäres Amin, Epoxy.

Gut geeignete derartige Vernetzer sind solche mit einem Molekulargewicht im Bereich von 30 bis 500 g/mol. Beispielhaft seien genannt: Alkanolamine, wie Triethanolamin; Carbonsäuren, wie Zitronensäure, Weinsäure, Butanteracarbonsäure; Alkohole, wie Zucker, zum Beispiel Fructose, Glucose, Saccharose, Sorbitol oder Melasse, oder wie Glycerin, Glycol; Epoxide, wie Bisphenol-A oder Bisphenol-F.

In einer Ausführungsform enthält die Komponente (I) keinen derartigen niedermolekularen Vernetzer (ii).

In einer weiteren Ausführungsform enthält das Bindemittel B, vorzugsweise die Komponente (I), einen niedermolekularen Vernetzer (ii) mit mindestens zwei funktionellen Hydroxy-Gruppen.

In einer weiteren Ausführungsform enthält das Bindemittel B, vorzugsweise die Komponente (I), einen niedermolekularen Vernetzer (ii) mit einem Molekulargewicht im Bereich von 30 bis 500 g/mol und mit mindestens zwei funktionellen Hydroxy-Gruppen.

In einer weiteren Ausführungsform enthält das Bindemittel B, vorzugsweise die Komponente (I), einen niedermolekularen Vernetzer (ii) mit einem Molekulargewicht im Bereich von 30 bis 500 g/mol, welcher ein Zucker, vorzugsweise Fructose, Glucose, Saccharose, Sorbitol oder Melasse ist.

Die Menge des niedermolekularen Vernetzers (ii) in den oben genannten Ausführungsformen liegt im Bereich von 1 Gew.-% bis 100 Gew.-%, vorzugsweise 5 Gew.-% bis 50 Gew.-%, jeweils bezogen auf die Summe der Komponenten (I) und (II) als reine, unverdünnte Substanz, bzw. als Feststoff.

Polymer M ist aus folgenden Monomeren aufgebaut:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wenigstens eines weiteren ethylenisch ungesättigten Monomeren, welches sich von den Monomeren M1 unterscheidet (Monomer(e) M2).

Polymer M ist durch radikalisch initiierte Emulsionspolymerisation in einem wässrigen Medium der entsprechenden Monomereren M1 und/oder M2 erhältlich. Polymer M kann einphasig oder mehrphasig vorliegen, kann einen Kern/Schale-Aufbau haben.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt (siehe zum Beispiel: Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)).

Die radikalisch initiierte wässrige Emulsionspolymerisationsreaktionen erfolgen üblicherweise so, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert.

Als Monomer(e) M1 kommen insbesondere Glycidylacrylat und/oder Glycidylmethacrylat sowie Hydroxyalkylacrylate und -methacrylate mit C2- bis C10-Hydroxyalkylgruppen, insbesondere C2- bis C4-Hydroxyalkylgruppen und bevorzugt C2- und C3-Hydroxyalkylgruppen in Betracht, zum Beispiel 2-Hydroxyethylacrylat, 2-Hydroxyethylmethacrylat, 3-Hydroxypropylacrylat, 3-Hydroxypropylmethacrylat, 4-Hydroxybutylacrylat und/oder 4-Hydroxybutylmethacrylat. Mit besonderem Vorteil werden eines oder mehrere, vorzugsweise eines oder zwei, der folgenden Monomere M1 eingesetzt: 2-Hydroxyethylacrylat, 2-Hydroxyethylmethacrylat, Glycidylacrylat, Glycidylmethacrylat.

Erfindungsgemäß ist es möglich, gegebenenfalls eine Teil- oder die Gesamtmenge an Monomeren M1 im Polymerisationsgefäß vorzulegen. Es ist aber auch möglich, die Gesamtmenge oder die gegebenenfalls verbliebene Restmenge an Monomeren M1 während der Polymerisationsreaktion zuzudosieren. Die Gesamtmenge oder die gegebenenfalls verbliebene Restmenge an Monomeren M1 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M1 während der Polymerisationsreaktion kontinuierlich mit gleichbleibenden Mengenströmen, insbesondere als Bestandteil einer wässrigen Monomerenemulsion.

Als Monomer(e) M2 kommen insbesondere in einfacher Weise mit Monomer(en) M1 radikalisch copolymerisierbare ethylenisch ungesättigte Verbindungen in Betracht, beispielsweise Ethylen; vinylaromatische Monomere, wie Styrol, α-Methylstyrol, o-Chlorstyrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, - nonyl-, -decyl- und -2-ethylhexylester, Fumar- und Maleinsäuredimethylester oder -din-butylester; Nitrile α,β-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien (Butadien) und Isopren. Die genannten Monomere bilden in der Regel die Hauptmonomeren, die, bezogen auf die Gesamtmenge an Monomeren M2, einen Anteil von ≥ 50 Gew.-%, bevorzugt ≥ 80 Gew.-% und insbesondere ≥ 90 Gew.-% auf sich vereinen. In aller Regel weisen diese Monomeren in Wasser bei Normalbedingungen (20 °C, 1 atm (absolut)) lediglich eine mäßige bis geringe Löslichkeit auf.

Monomere M2, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z. B. Acrylsäure, Methacrylsäure, Maleinsäure, Fumarsäure, Itaconsäure, Acrylamid und Methacrylamid; ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethyl-amino)ethylmethacrylat, 2-(N-tert.-Butylamino)ethylmethacrylat, N-(3-N',N'-Dimethylaminopropyl)methacrylamid, 2-(1-Imidazolin-2-onyl)ethylmethacrylat und Ureidomethacrylat. Im Normalfall sind die vorgenannten wasserlöslichen Monomeren M2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren M2, enthalten.

Monomere M2, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang auch von Bedeutung sind Verbindungen, wie Diacetonacrylamid und Acetylacetoxyethylacrylat bzw. -methacrylat. Häufig werden die vorgenannten vernetzenden Monomeren M2 in Mengen von ≤ 10 zu Gew.-%, bevorzugt in Mengen von ≤ 5 Gew.-% und insbesondere bevorzugt in Mengen von ≤ 3 Gew.-%, jeweils bezogen auf die Gesamtmenge an Monomeren A2, eingesetzt. Häufig werden jedoch keinerlei derartige vernetzende Monomeren M2 verwendet.

Erfindungsgemäß ist es möglich, gegebenenfalls eine Teil- oder die Gesamtmenge an Monomeren M2 im Polymerisationsgefäß vorzulegen. Es ist aber auch möglich, die Gesamtmenge oder die gegebenenfalls verbliebene Restmenge an Monomeren M2 während der Polymerisationsreaktion zuzudosieren. Die Gesamtmenge oder die gegebenenfalls verbliebene Restmenge an Monomeren M2 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M2 während der Polymerisationsreaktion kontinuierlich mit gleichbleibenden Mengenströmen, insbesondere als Bestandteil einer wässrigen Monomerenemulsion.

Zur Herstellung der wässrigen Dispersion der Komponente (II) werden häufig Dispergierhilfsmittel mitverwendet, die sowohl die Monomerentröpfchen als auch die durch die radikalisch initiierte Polymerisation erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: C₄ bis C₁₂), ethoxilierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 3 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Bevorzugt werden für das erfindungsgemäße Verfahren nichtionische und/oder anionische Emulgatoren verwendet.

In der Regel beträgt die Menge an eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M.

Erfindungsgemäß ist es möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel während der Polymerisationsreaktion zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Bevorzugte Polymere M enthalten a) 0,01 bis 50 Gew.-% wenigstens eines ethylenisch ungesättigten Monomeren, welches wenigstens eine Epoxid- und/oder wenigstens eine Hydroxyalkylgruppe enthält (Monomer(e) M1) und b) 50 bis 99,99 Gew.-% wenigstens eines weiteren ethylenisch ungesättigten Monomeren, welches sich von den Monomeren M1 unterscheidet (Monomer(e) M2).

Besonders bevorzugte derartige Polymere M sind erhältlich durch radikalisch initiierte Lösungspolymersiation von 10 bis 30 Gew.-%, vorzugsweise 15 bis 22 Gew.-% Acrylsäure- und/oder Methacrylsäureestern mit C1-8-Alkoholen - vorzugsweise Methanol, n-Butanol, 2-Ethylhexanol - mit 40 bis 70 Gew.-%, vorzugsweise 55 bis 65 Gew.-% Styrol und von 5 bis 50 Gew.-%, vorzugsweise 20 bis 30 Gew.-% 2-Hydroxyethylacrylat und/oder 2-Hydroxyethylmethacrylat und/oder Glycidylacrylat und/oder Glycidylmethacrylat, wobei die Summe der Komponenten 100 Gew.-% ergibt.

Weitere bevorzugte Polymere M enthalten kein(e) Monomer(e) M1 und sind erhältlich durch radikalisch initiierte Lösungspolymerisation von 80 bis 99 Gew.-%, vorzugsweise 85 bis 95 Gew.-% Acrylsäureestern und/oder Methacrylsäureestern mit C1-8-Alkoholen - vorzugsweise Methanol, n-Butanol, 2-Ethylhexanol - mit 0 bis 5 Gew.-%, vorzugsweise 1 bis 3 Gew.-% Ureidomethacrylat und von 0,5 bis 5 Gew.-%, vorzugsweise 1 bis 4 Gew.-% 3 bis 6 C-Atome aufweisende α,β-monoethylenisch ungesättigte Mono- und Dicarbonsäuren - vorzugsweise Acrylsäure, Methacrylsäure - und/oder Amiden dieser Säuren, wobei die Summe der Komponenten 100 Gew.-% ergibt.

Bevorzugt haben derartige Polymere einen Kern/Schale-Aufbau (isotrope Verteilung der Phasen, zum Beispiel zwiebelschalenförmig) oder einen Janus-Aufbau (anisotrope Verteilung der Phasen).

Durch gezielte Variation von Art und Menge der Monomeren M1 und M2 ist es dem Fachmann erfindungsgemäß möglich, wässrige Polymerzusammensetzungen herzustellen, deren Polymere M eine Glasübergangstemperatur Tg bzw. einen Schmelzpunkt im Bereich von -60 bis 270 °C aufweisen.

Vorteilhaft liegt die Glasübergangstemperatur Tg des Polymeren M im Bereich von 10 °C bis 120 °C und bevorzugt im Bereich von 40 °C bis 80 °C.

Mit der Glasübergangstemperatur T_{g}, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Die T_{g}-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäßen Komponenten (I) und (II) weisen üblicherweise Polymerfeststoffgehalte (Gesamtmenge an Polymer A oder Gesamtmenge an Polymer M) von ≥ 10 und ≤ 70 Gew.-%, häufig ≥ 20 und ≤ 65 Gew.-% und oft ≥ 40 und ≤ 60 Gew.-%, bezogen auf die jeweilige wässrige Komponente (I) oder (II), auf.

Der über quasielastische Lichtstreuung (ISO-Norm 13321) ermittelte zahlenmittlere Teilchendurchmesser (cumulant z-average) des Polymeres M in der der wässrigen Komponente (II) liegt in der Regel zwischen 10 und 2000 nm, häufig zwischen 20 und 1000 nm und oft zwischen 50 und 700 nm bzw. 80 bis 400 nm.

Das Gewichtsverhältnis des Polymers A : Polymer M liegt im Bereich von 1 : 10 bis 10 : 1, vorzugsweise im Bereich von 3 :1 bis 1 : 3 besonders bevorzugt im Bereich von 3 : 2 bis 2 : 3. Die Gewichtsangaben beziehen sich jeweils auf die reinen, unverdünnten Substanzen, bzw. auf den Feststoff.

Der pH-Wert des Bindemittels B liegt im Bereich von 0 bis 4 vorzugsweise im Bereich von 1,5 bis 3 . Der gewünschte pH-Wert des Bindemittels B stellt sich in der Regel durch die Kombination der Komponenten (I) und (II) und gegebenenfalls Komponente (III) ein.

Der pH-Wert des Bindemittels B am Ort der Wirkung kann aber in üblicher Weise durch Zugabe von anorganischen oder organischen Säuren, zum Beispiel Mineralsäuren wie Schwefelsäure Salzsäure, organische Sulfonsäuren, Carbonsäuren wie Ameisensäure oder Essigsäure oder anorganischen oder organischen Basen, zum Beispiel Natriumhydoxyd (wässrig oder in Substanz), Calciumoxid oder Calciumcarbonat (jeweils wässrig oder in Substanz) oder Ammoniak, wässrig oder als Substanz auf den gewünschten Wert im Bereich von 0 bis 4 vorzugsweise im Bereich von 1,5 bis 3 eingestellt werden.

Im allgemeinen kann das fertig gemischte Bindemittel B mit den oben genannten pH-Wertbereichen eingesetzt werden. Der gewünschte pH-Wert - wie oben beschrieben - kann aber auch eingestellt werden, indem man die einzelnen Komponenten des Bindemittels B und die oben beschriebenen Säuren oder Basen getrennt auf das lignocellulosehaltige Substrat aufbringt. Der Fachmann kann durch Wahl der pH-Werte der Komponenten des Bindemittels B und der zugegebenen Säuren oder Basen diese so kombinieren, daß sich der gewünschte pH-Wert auf dem lignocellulosehaltigen Substrat einstellt.

Unter dem Begriff Additive als Komponente (III) sind alle dem Fachmann bekannten Additive zu verstehen, beispielsweise Wachse, Paraffinemulsion, flammhemmende Additive, Netzmittel, Salze. Diese Additive können in einer Menge von 0 bis 20 Gew.-%, bevorzugt 0 bis 5 Gew.-%, insbesondere 0 bis 1 Gew.-%, bezogen auf den Feststoffgehalt des lignocellulosehaltigen Substrats A, zum Beispiel absolut trockenes (atro) Holz, zugefügt werden.

Der lignocellulosehaltige Stoff wird in der Regel durch in Berührung bringen der Lignocelluloseteilchen A, vorzugsweise Holzteilchen A, mit dem Bindemittel B erhalten. Derartige, sogenannte Beleimungs-Verfahren sind für die Herstellung von konventionellen Holzwerkstoffen mit üblichen Aminoplast-Harzen bekannt und beispielsweise in "Taschenbuch der Spanplatten Technik" H.-J. Deppe, K. Ernst, 4. Aufl., 2000, DRW - Verlag Weinbrenner GmbH&Co., Leinfelden-Echterdingen, Kapitel 3.3 beschrieben.

Das Bindemittel B kann auf verschiedene Arten mit den Lignocelluloseteilchen A, vorzugsweise den Holzteilchen A, in Berührung gebracht werden, bevorzugt durch Aufsprühen von B auf A.

Das Bindemittel B kann fertig gemischt mit A in Berührung gebracht, vorzugsweise aufgesprüht werden. Es können aber auch die Komponenten (I) und (II) und gegebenenfalls (III) unvermischt, also getrennt, mit A in Berührung gebracht, vorzugsweise aufgesprüht, werden. Die letztgenannte Variante bietet sich beispielsweise an, wenn die Komponente (I) und (II) und gegebenenfalls (III) in fertiger Mischung unerwünschte chemische Reaktionen und/oder unerwünschte physikalische Veränderungen, zum Beispiel Koagulieren, Ausflocken, eingehen.

Bei der Beleimung wird üblicherweise die erfindungsgemäße Bindemittelmischung in solchen Menge eingesetzt, dass auf 100 g atro Fasern oder Späne vorteilhaft 0,1 bis 50 g, bevorzugt 0,1 bis 30 g, besonders bevorzugt 0,5 bis 15 g und insbesondere 3 bis 10 g Bindemittel verwendet werden.

Ferner betrifft die vorliegende Erfindung Formkörper, enthaltend einen lignocellulosehaltigen Stoff erhältlich durch Behandeln von Lignocellulose A mit einem Bindemittel B, wie oben beschrieben. Derartige Formkörper werden im folgenden als erfindungsgemäße Formkörper bezeichnet; sie können eine regelmäßige oder unregelmäßige Raumform einnehmen, zum Beispiel Kugel, Quader. Bevorzugte erfindungsgemäße Formkörper sind flächig, besonders bevorzugt in Form einer Platte.

Weitere erfindungsgemäße Formkörper sind solche in welchen der lignocellulosehaltige Stoff Holz ist, im folgenden auch erfindungsgemäße Holzwerkstoffe genannt. Diese können eine regelmäßige oder unregelmäßige Raumform einnehmen, zum Beispiel Kugel, Quader. Bevorzugte erfindungsgemäße Holzwerkstoffe sind flächig, besonders bevorzugt in Form einer Platte.

Die Herstellung der erfindungsgemäßen Formkörper, vorzugsweise der erfindungsgemäßen Holzwerkstoffe geschieht in der üblichen Art, wie zum Beispiel in "Taschenbuch der Spanplatten Technik" H.-J. Deppe, K. Ernst, 4. Aufl., 2000, DRW - Verlag Weinbrenner GmbH & Co., Leinfelden-Echterdingen, Kapitel 3.5 beschrieben.

Üblicherweise wird zunächst der erfindungsgemäße lignocellulosehaltige Stoff, vorzugsweise Holz, zum Beispiel in Form von Fasern, Spänen, Furnieren oder Strands, wie oben beschrieben hergestellt.

Anschließend wird der erfindungsgemäße lignocellulosehaltige Stoff, vorzugsweise Holz, zum Beispiel in Form von Fasern, Spänen, Furnieren oder Strands nach einem üblichen Verfahren zu erfindungsgemäßen Formkörpern, vorzugsweise erfindungsgemäßen Holzwerkstoffen, verpresst.

Hierzu wird üblicherweise durch Aufstreuen des erfindungsgemäßen lignocellulosehaltige Stoffs - vorzugsweise Holz, besonders bevorzugt Holz in Form von Spänen oder Fasern - auf einen Träger eine Faser- / Spänematte erzeugt und diese wird üblicherweise bei Temperaturen von 80 °C bis 250 °C und bei Drücken von 5 bis 50 bar zu erfindungemäßen Formkörpern, vorzugsweise erfindungsgemäßen Holzwerkstoffen verpresst (siehe zum Beispiel: " Taschenbuch der Spanplatten Technik" H.-J. Deppe, K. Ernst, 4. Aufl., 2000, DRW - Verlag Weinbrenner GmbH & Co., Leinfelden-Echterdingen, Seite 232 - 254. "MDF - Mitteldichte Faserplatten" H.-J. Deppe, K. Ernst, 1996, DRW - Verlag Weinbrenner GmbH & Co., Leinfelden-Echterdingen, Seite 93 - 104). Die Presszeiten betragen bei Platten in der Regel 7 bis 40 sec/mm Plattendicke, vorzugsweise liegen sie im Bereich von 12 bis 26 sec/mm Plattendicke.

Als besonders bevorzugte erfindungsgemäße Holzwerkstoffe kommen alle Werkstoffe in Betracht, die aus Holzstreifen gefertigt sind, beispielsweise Furnierplatten oder Sperrholzplatten, aus Holzspänen hergestellte Holzwerkstoffe, beispielsweise Spanplatten oder OSB-Platten, sowie Holzfaserwerkstoffe wie LDF-, MDF- und HDF-Platten.

Vorteilhaft werden nach dem erfindungsgemäßen Verfahren formaldehydfreie Bindemittel enthaltende Holzwerkstoffe hergestellt. Bevorzugt sind OSB-, Holzfaser- und Spanplatten.

Ferner betrifft die vorliegende Erfindung die Verwendung der erfindungsgemäßen Formkörper, bevorzugt der erfindungsgemäßen Holzwerkstoffe zur Herstellung von Möbeln, von Verpackungsmaterialien, im Hausbau, im Trockenausbau oder im Innenausbau, beispielsweise als Laminat, Dämmstoff, Wand- oder Deckenelement, oder auch in Kraftfahrzeugen.

### Beispiele

### 1. Komponenten (I) und (II)

Die Komponente (I) war eine handelsübliche wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthielt keine weitere Vernetzerkomponente, wie Multialkanolamine, zum Beispiel Triethanolamin. Das gewichtsmittlere Molekulargewicht Mw betrug 80.000 g/mol. Der Feststoffgehalt betrug 45 Gew.-%.

Die Komponente (II) war eine handelsübliche wässrige Dispersion eines erfindungsgemäßen Polymeren M, erhältlich durch radikalisch initiierte Emulsions-Polymerisation in Wasser von 59 Gew.-% Styrol und 12 Gew.-% Methylmethacrylat, 5 Gew.-% n-Butylacrylat, 16 Gew.-% Hydroxyethylacrylat und 8 Gew.-% Glycidylmethacrylat. Die Teilchengrösse betrug im Mittel 140 nm. Der pH-Wert war 1,9. Der Feststoffgehalt betrug 46 Gew.-%.

### 2. Liste der verwendeten Bindemittelzusammensetzungen.

BM1: Unter 1. beschriebene Komponente (I) mit 30 Gew.-% Triethanolamin.
BM2 und BM3: Polymerzusammensetzung aus Polyacrylsäure / Styrol -plus-Acrylatbasierter Copolymer-Dispersion hergestellt nach WO 2007/122089 A1.
BM4: Erfindungsgemäße 1 : 1-Mischung (bezogen auf den jeweiligen Feststoffgehalt) aus unter 1. beschriebenen Komponenten (I) und (II): pH = 2.0, Tg = 60°C.
BM5: Handelsüblicher UF-Leim (Harnstoff-Formaldehydleim).
BM6 und BM7: Erfindungsgemäße 1 : 1-Mischung (bezogen auf den jeweiligen Feststoffgehalt) aus Komponenten (I) und (II): pH = 2.0 wobei für BM6: Tg = 30°C;
und für BM7: Tg = 10°C. BM6 und BM7 haben qualitativ die gleiche Zusammensetzung wie die unter 1. beschriebene Komponente (II), unterscheiden sich aber in der Glasübergangstemperatur Tg.
BM8: Erfindungsgemäße 6 : 4-Mischung (bezogen auf den jeweiligen Feststoffgehalt) aus unter 1. beschriebenen Komponenten (I) und (II): pH = 2.0, Tg = 60°C.
BM9: Erfindungsgemäße Mischung aus BM8 plus 10 Gew.-% Saccharose (bezogen auf die Summe des Feststoffgehalts der Komponenten (I) und (II) im BM8)

### 3. Meßmethoden und Meßergebnisse

Die Bestimmung der Querzugfestigkeit erfolgte nach EN 319.

Die Bestimmung der Quellwerte erfolgte nach EN 317.

Die Ergebnisse sind in den Tabellen 1 und 2b, 2c zusammengestellt.

### 4. Herstellung und Prüfung der erfindungsgemäßen Holzwerkstoffe

### 4.1 Herstellung von Mini-Spanplatten und deren Prüfung auf Quellung

174 g Fichte-Späne (bei 20°C, 65% Luftfeuchte klimatisiert) wurden mit der entsprechenden Menge an Bindemittel (siehe Tabelle 1, Spalte Beleimung; angegeben sind die Feststoffmengen des Bindemittels bezogen auf atro Holz) im Eirich-Mischer beleimt und in Formen (50mm x 50mm x 19mm) mit 40 kN bei 190 °C gepresst. Die Presszeiten sind in der Tabelle angegeben.

Der Quellwert, und zwar die Dickenquellung, wurde nach Inkubation in 20°C warmem Wasser nach 2 h bestimmt und relativ zur Ursprungsdicke der Presslinge angegeben.

Die Ergebnisse dieser Versuche sind in Tabelle 1 dargestellt

**Tabelle 1: Quellwerte von Mini-Spanplatten**

| Bindemittel | Presszeit [s/mm] | Beleimung [Gew.-% atro] | Quellwert (nach 2h) |
|---|---|---|---|
| BM1 | 15 | 9% | keine Bindung [a] |
| BM2 | 15 | 9% | 14% |
| BM3 | 15 | 9% | 11% |
| BM4 (Erfindung) | 9 | 6% | 11% |
| BM4 (Erfindung) | 10,5 | 6% | 10% |
| BM4 (Erfindung) | 12 | 6% | 9% |

### [a] Es ließ sich keine Platte herstellen, die Holzspäne zerbröselten.

Die Quellwertversuche zeigen, daß, sogar bei geringerer Beleimung und bei kürzerer Presszeit, die erfindungsgemäße Bindemittelzusammensetzung anderen formaldehydfreien Leimen wie BM1 oder nach WO 2007/122089 A1 (B2 und BM3) hergestellten überlegen ist.

### 4.2 Herstellung von Laborspanplatten und deren Prüfung auf Querzug und Quellung

Es wurden Laborspanplatten analog zu konventionellen aminoplastharzhaltigen Spanplatten hergestellt. Es wurde ohne Pressblech, aber mit Trennpapier gearbeitet. Die Prüfkörper für die Querzugfestigkeit und die Quellwerte wurden aus der jeweiligen selben Platte entnommen. Näheres entnimmt man der Tabelle 2a.

**Tabelle 2a: Parameter der Laborspanplattenherstellung**

| Versuch → | Dimension | 1 (Vergleich) | 2 | 3 |
|---|---|---|---|---|
| Bindemittel → | ---- | BM5 | BM6 | BM7 |
| Einwaage Späne: atro/beleimt | g | 500/530 | 500/530 | 500/530 |
| Spantyp-Fichte (u= 2,6%) | --- | B-Späne | B-Späne | B-Späne |
| Festharz Leim | Gew.-% | 67,0 | 46,0 | 46,0 |
| Festharz Leim in Flotte | Gew.-% | 50,0 | 43,8 | 43,8 |
| Festharz auf atro Späne | Gew.-% | 9,0 | 9,0 | 9,0 |
| Leimflotte aufsprühen | g | 90,0 | 102,7 | 102,7 |
| Spanfeuchte, beleimt | Gew.-% | 9,7 | 11,7 | 12,1 |
| Pressdruck(profil) | N/mm² | 4 / 2 / 1 | 4 / 2 / 1 | 4 / 2 / 1 |
| Presszeit(profil) bei 210 °C | s | 60 / 30 / 120 | 60/ / 30 / 120 | 60/ / 30 / 120 |

**Tabelle 2b: Messung der Querzugfestigkeit**

| Versuch → | Dimension | 1 (Vergleich) | 2 | 3 |
|---|---|---|---|---|
| Bindemittel → | ---- | BM5 | BM6 | BM7 |
| Dicke bei Prüfung | mm | 8,7 | 8,7 | 8,7 |
| Dichte [a] | Kg/m³ | 621 | 581 | 572 |
| Standardabweichung Dichte | +/- Kg/m³ | 44,9 | 44,7 | 51,7 |
| Querzugfestigkeit V20 | N/mm² | 0,60 | 0,38 | 0,39 |
| Standardabweichung der Querzugfestigkeit | +/- N/mm² | 0,1 | 0,09 | 0,09 |

| | | | | |
|---|---|---|---|---|
| [a] Mittelwert aus 8 Messungen | | | | |

**Tabelle 2c: Messung der Quellung [a]**

| Versuch → | Dimension | 1 (Vergleich) | 2 | 3 |
|---|---|---|---|---|
| Bindemittel → | ---- | BM5 | BM6 | BM7 |
| Dicke bei Prüfung | Mm | 8,7 | 8,7 | 8,7 |
| Dichte [b] | Kg/m³ | 639 | 595 | 586 |
| Standardabweichung Dichte | +/- Kg/m³ | 29,3 | 41,4 | 46,3 |
| Quellung nach 2 h | % | 25,0 | 18,9 | 20,5 |
| Standardabweichung Quellung nach 2 h | +/- % | 2,4 | 1,5 | 0,7 |
| Quellung nach 24 h | % | 28,2 | 21,8 | 24,4 |
| Standardabweichung Quellung nach 24 h | +/- % | 2,7 | 1,9 | 1,4 |

| | | | | |
|---|---|---|---|---|
| [a]: Plattenausschnitt von 50 x 50 mm. Die Quellung, und zwar die Dickenquellung, wurde nach Inkubation in 20° warmem Wasser nach 2 h oder 24 h bestimmt und relativ zur Ursprungsdicke der Presslinge angegeben. [b]: Mittelwert aus 7 Messungen | | | | |

Die Versuche zeigen, daß die Querzugfestigkeit der erfindungsgemäßen Platten (Versuche 2 und 3) etwas geringer ist als die von Spanplatten auf Basis von Aminoplastharz-Leimen (Versuch 1, Vergleich). Allerdings erfüllt die Querzugfestigkeit der erfindungsgemäßen Platten die Norm für herkömmliche Spanplatten (Vergleichswert Querzugfestigkeit herkömmliche Spanplatte = 0,4 bei einer Dichte von 650 kg/m³).

Bei der Bilanz aus Querzugsfestigkeit und Quellwert sind die erfindungsgemäßen Platten den Spanplatten auf Basis von Aminoplastharz-Leimen (Versuch 1, Vergleich) überlegen: niedrigere Quellwerte bei immer noch guter Querzugfestigkeit.

### 4.3 Herstellung von Labor-Dünn-MDF-Platten und deren Prüfung auf Querzug

Es wurden 3 mm dicke mitteldichte Faserplatten analog zu konventionellen aminoplastharzhaltigen Faserplatten im Technikumsmaßstab (30 cm x30 cm) hergestellt. Die Holzfasern wurden in einem Lödigemischer mit 6 Gew.-% atro Bindemittel BM8 bzw. BM9 beleimt.

Die Prüfkörper für die Querzugfestigkeit und die Quellwerte wurden aus der jeweiligen selben Platte entnommen. Näheres entnimmt man der Tabelle 3.

**Tabelle 3: Messwerte der mit BM8 und BM9 hergestellten Prüfkörper**

| | Gesamtgehalt Saccharose [a] | Soll-Dicke | Presszeit | Dicke | Dichte | Querzugfestigkeit | |
|---|---|---|---|---|---|---|---|
| Bindemittel | [Gew.-%] | mm | s | mm | kg/m³ | N/mm² | Relativ |
| BM8 | 0 | 3 | 24 | 3,5 | 664 | 0,26 | 100% |
| | | | 30 | 3,5 | 660 | 0,28 | 100% |
| | | | 36 | 3,5 | 643 | 0,26 | 100% |
| | | | 60 | 3,4 | 660 | 0,29 | 100% |
| BM9 | 9 | | 24 | 3,4 | 661 | 0,32 | 123% |
| | | | 30 | 3,3 | 685 | 0,38 | 138% |
| | | | 36 | 3,3 | 665 | 0,35 | 135% |
| | | | 60 | 3,4 | 668 | 0,40 | 137% |

| | | | | | | | |
|---|---|---|---|---|---|---|---|
| [a] Anteil der Saccarose [Gew.-%] in der Gesamtmischung aus Komponente (I) + Komponente (II) + Saccarose, bezogen auf den jeweiligen Feststoffgehalt. | | | | | | | |

Die Versuche zeigen, daß die Querzugfestigkeit der erfindungsgemäßen Faserplatten durch Zugabe von 10 Gew.-% (bezogen auf den Feststoffgehalt des Bindemittels) einer Komponenete (ii) Saccharose um mehr als 20 % gesteigert werden kann.

## Patentansprüche

1. Lignocellulosehaltiger Stoff, erhältlich durch Behandlung von Lignocelluloseteilchen A mit einem Bindemittel B, wobei das Bindemittel B folgende Komponenten enthält:
Eine wässrige Komponente (I) enthaltend
(i) ein Polymer A, welches aus folgenden Monomeren aufgebaut ist:
a) 80 bis 100 Gew.-% wenigstens einer ethylenisch ungesättigten Mono-und/oder Dicarbonsäure (Monomer(e) A1) und
b) 0 bis 20 Gew.-% wenigstens eines weiteren ethylenisch ungesättigten Monomeren, welches sich von den Monomeren A1 unterscheidet (Monomer(e) A2)
und gegebenenfalls
(ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy
und eine Komponente (II) als wässrige Dispersion, enthaltend ein oder mehrere Polymer(e) M, welches aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wengistens eines weiteren ethylenisch ungesättigten Monomeren, welches sich von den Monomeren M1 unterscheidet (Monomer(e) M2)
sowie gegebenenfalls übliche Additive als Komponente (III).

2. Lignocellulosehaltiger Stoff gemäß Anspruch 1, wobei die Lignocelluloseteilchen A aus Holz sind.

3. Lignocellulosehaltiger Stoff gemäß Anspruch 1 oder 2, wobei das Gewichtsverhältnis des Polymers A : Polymer M im Bereich von 1 : 10 bis 10:1 liegt.

4. Formkörper, enthaltend einen lignocellulosehaltigen Stoff, wie in den Ansprüchen 1 bis 3 definiert.

5. Formkörper gemäß Anspruch 4, in Form einer Platte.

6. Formkörper gemäß Anspruch 5, wobei die Platte eine Spanplatte, Faserplatte oder OSB (oriented strand board)-Platte ist.

7. Verfahren zur Herstellung eines lignocellulosehaltigen Stoffs, wie in den Ansprüchen 1 bis 3 definiert, in welchem man Lignocelluloseteilchen A mit dem Bindemittel B in Berührung bringt.

8. Verfahren gemäß Anspruch 7, wobei das in Berührung bringen das Aufsprühen von B auf A ist.

9. Verfahren zur Herstellung von Formkörpern, wie in den Ansprüchen 4 bis 6 definiert, durch Verdichten eines lignucellulosehaltigen Stoffes, wie in den Ansprüchen 1 bis 3 definiert, und geeignetes Formen.

10. Verwendung des lignocellulosehaltigen Stoffes, wie in den Ansprüchen 1 bis 3 definiert, zur Herstellung von Formkörpern.

11. Verwendung der Formkörper, wie in den Ansprüchen 4 bis 6 definiert, zur Herstellung von Möbeln, von Verpackungsmaterialien, im Hausbau oder im Innenausbau oder in Kraftfahrzeugen.

## Claims

1. A lignocellulose-containing material, obtainable by treating lignocellulose particles A with a binder B, the binder B comprising the following components:
An aqueous component (I) comprising
(i) a polymer A which is composed of the following monomers:
a) from 80 to 100% by weight of at least one ethylenically unsaturated mono-and/or dicarboxylic acid (monomer(s) A1) and
b) from 0 to 20% by weight of at least one further ethylenically unsaturated monomer which differs from the monomers A1 (monomer(s) A2)
and optionally
(ii) a low molecular weight crosslinking agent having at least two functional groups which are selected from the group consisting of hydroxyl, carboxylic acid and derivatives thereof, primary, secondary and tertiary amine, epoxy
and a component (II) as an aqueous dispersion comprising one or more polymer(s) M which are composed of the following monomers:
a) from 0 to 50% by weight of at least one ethylenically unsaturated monomer which comprises at least one epoxide group and/or at least one hydroxyalkyl group (monomer(s) M1), and
b) from 50 to 100% by weight of at least one further ethylenically unsaturated monomer which differs from the monomers M1 (monomer(s) M2)
and optionally, customary additives as component (III).

2. The lignocellulose-containing material according to claim 1, the lignocellulose particles A comprising wood.

3. The lignocellulose-containing material according to claim 1 or 2, the weight ratio of polymer A:polymer M being in the range from 1:10 to 10:1.

4. A molding comprising a lignocellulose-containing material as defined in claims 1 to 3.

5. The molding according to claim 4, in the form of a board.

6. The molding according to claim 5, the board being a particle board, fiber board or OSB (oriented strand board).

7. A process for the production of a lignocellulose-containing material as defined in claims 1 to 3, in which lignocellulose particles A are brought into contact with the binder B.

8. The process according to claim 7, the bringing into contact comprising the spraying of B onto A.

9. A process for the production of moldings as defined in claims 4 to 6 by compression of a lignocellulose-containing material as defined in claims 1 to 3 and suitable shaping.

10. The use of the lignocellulose-containing material as defined in claims 1 to 3 for the production of moldings.

11. The use of moldings as defined in claims 4 to 6 for the production of pieces of furniture and of packaging materials, in house construction or in interior finishing or in motor vehicles.

## Revendications

1. Substance contenant de la lignocellulose, pouvant être obtenue par traitement de particules de lignocellulose A avec un liant B, le liant B contenant les composants suivants :
un composant aqueux (I) contenant
(i) un polymère A qui est formé à partir des monomères suivants :
a) 80 à 100 % en poids d'au moins un acide mono- et/ou dicarboxylique éthyléniquement insaturé (monomère(s) A1) et
b) 0 à 20 % en poids d'au moins un autre monomère éthyléniquement insaturé qui diffère des monomères A1 (monomère(s) A2)
et éventuellement
(ii) un agent de réticulation de poids moléculaire faible contenant au moins deux groupes fonctionnels qui sont choisis dans le groupe constitué par hydroxy, acide carboxylique et ses dérivés, amine primaire, secondaire et tertiaire, époxy,
et un composant (II) en tant que dispersion aqueuse, contenant
un ou plusieurs polymères M, qui sont formés à partir des monomères suivants :
a) 0 à 50 % en poids d'au moins un monomère éthyléniquement insaturé, qui contient au moins un groupe époxyde et/ou au moins un groupe hydroxyalkyle (monomère(s) M1) et
b) 50 à 100 % en poids d'au moins un autre monomère éthyléniquement insaturé qui diffère des monomères M1 (monomère(s) M2),
ainsi qu'éventuellement des additifs usuels en tant que composant (III).

2. Substance contenant de la lignocellulose selon la revendication 1, dans laquelle les particules de lignocellulose A sont en bois.

3. Substance contenant de la lignocellulose selon la revendication 1 ou 2, dans laquelle le rapport en poids du polymère A:polymère M se situe dans la plage allant de 1:10 à 10:1.

4. Corps moulé, contenant une substance contenant de la lignocellulose telle que définie dans les revendications 1 à 3.

5. Corps moulé selon la revendication 4, sous la forme d'une plaque.

6. Corps moulé selon la revendication 5, dans lequel la plaque est un panneau d'agglomérés, un panneau de fibres ou un panneau OSB (Oriented Strand Board).

7. Procédé de fabrication d'une substance contenant de la lignocellulose, telle que définie dans les revendications 1 à 3, selon lequel des particules de lignocellulose A sont mises en contact avec le liant B.

8. Procédé selon la revendication 7, dans lequel la mise en contact est la pulvérisation de B sur A.

9. Procédé de fabrication de corps moulés, tels que définis dans les revendications 4 à 6, par compactage d'une substance contenant de la lignocellulose, telle que définie dans les revendications 1 à 3, et façonnage approprié.

10. Utilisation de la substance contenant de la lignocellulose, telle que définie dans les revendications 1 à 3, pour la fabrication de corps moulés.

11. Utilisation des corps moulés tels que définis dans les revendications 4 à 6, pour la fabrication de meubles, de matériaux d'emballage, dans le bâtiment ou dans la décoration intérieure ou dans les automobiles.
